# DEMANDE DE BREVET EUROPEEN

(11) **EP 1 835 320 A1**
(43) Date de publication de la demande: **19.09.2007**
(21) Numéro de dépôt: 07103991.1
(22) Date de dépôt: 13.03.2007
(51) Int. Cl.: G02B 6/44

(54) **Cable de raccordement par voie aerienne ou souterraine**

(30) Priorité: 13.03.2006 FR 0602164
(71) Demandeur: ACOME, SOCIETE COOPERATIVE DE TRAVAILLEURS, F-75008 Paris (FR)
(72) Inventeur: LEPLE, Christophe, 50300, SAINT SENIER / AVRANCHES (FR); BRAULT, Dominique, 50140, MORTAIN (FR); LALLINEC, Patrice, 14500, Maisoncelles la Jourdan (FR); AUVRAY, Patrick, 50140, Le Neufbourg (FR); MARTIN, Olivier, 50140, Mortain (FR); ANFRAY, Christophe, 50140, Mortain (FR); LEMONNIER, Jacques, 50140, Mortain (FR)
(74) Mandataire: Le Forestier, Eric

(57) **Abrégé**

L'invention concerne un câble de raccordement (1) destiné à être placé entre un câble de distribution relié à un réseau de distribution général et au moins une prise d'alimentation (32) dans un bâtiment (3), ce câble de raccordement comprenant une enveloppe extérieure hybride, à l'intérieur de laquelle s'étend sans discontinuité optique au moins un microcâble contenant au moins une fibre optique (140), ladite enveloppe extérieure comprenant une première gaine (11) avec une extrémité proximale et une extrémité distale (110) et une deuxième gaine (12) avec une extrémité proximale et une extrémité distale (120), les extrémités proximales desdites gaines étant raccordées au moyen d'un raccord mécanique (13) et l'extrémité distale (110) de la première gaine (11) étant destinée à être raccordée audit câble de distribution et l'extrémité distale (120) de la deuxième gaine (12) étant destinée à être raccordée à ladite au moins une prise d'alimentation (32), ladite première gaine (11) présentant des caractéristiques mécaniques adaptées à l'environnement extérieur et ladite deuxième gaine (12) présentant des caractéristiques mécaniques adaptées à une utilisation à l'intérieur du bâtiment (3).

## Description

La présente invention concerne un câble de raccordement entre un câble de distribution relié à un réseau de distribution général et au moins une prise d'alimentation chez un abonné.

Le réseau de distribution considéré peut être un réseau cuivre, mais l'invention concerne surtout des câbles de raccordement pour des réseaux optiques.

Le câble de distribution est supporté par une série de poteaux répartis sur une zone géographique donnée.

Une technique de raccordement classique consiste à poser un câble entre un point de branchement placé sur un de ces poteaux et un bâtiment. Ce câble peut être aérien ou souterrain.

Le point de branchement permet d'établir la liaison, notamment optique, entre le câble de distribution et le câble de raccordement.

Un câble aérien entre un point de branchement et la façade d'un bâtiment est communément dénommé « drop cable ».

A partir de la façade du bâtiment, le câble aérien est raccordé par l'intermédiaire d'un boîtier à un autre câble qui, lui, est destiné à pénétrer dans le bâtiment.

Le câble aérien et le câble placé à l'intérieur du bâtiment présentent chacun des propriétés mécaniques spécifiques, puisqu'ils sont destinés à des environnements très différents.

Ainsi, le câble aérien doit être robuste, résister à la traction ainsi qu'aux éléments naturels (UV, pluie, glace, vent, etc.).

D'un autre côté, le câble destiné à être posé à l'intérieur du bâtiment doit répondre aux exigences réglementaires concernant la résistance au feu. Il doit également être relativement souple et présenter un faible rayon de courbure pour pouvoir suivre un cheminement qui peut être sinueux à l'intérieur du bâtiment.

Ce câble est installé à l'intérieur du bâtiment jusqu'à la prise terminale, soit au travers de gaines électriques, soit en étant collé ou agrafé, notamment le long des plinthes. Dans ce deuxième cas, le câble reste apparent.

Cette technique de raccordement nécessite donc, non seulement un branchement au niveau du poteau, mais également un raccordement au niveau de la façade de l'immeuble.

Ce raccordement prend du temps et demande des équipements spécifiques au raccordement (boîtiers...) et il est donc coûteux.

De surcroît, le boîtier de raccordement sur la façade du bâtiment constitue une zone de faiblesse qui nécessite une protection spécifique.

Une autre technique consiste à utiliser un câble qui présente à la fois les propriétés mécaniques d'un câble aérien et celles d'un câble intérieur.

Avec un tel câble, dit « câble intérieur / extérieur », le raccordement s'effectue depuis un point de branchement situé sur un des poteaux supportant le câble de distribution. Le câble intérieur / extérieur est ensuite tiré jusqu'à la façade d'un bâtiment. Et c'est ce même câble qui pénètre à l'intérieur du bâtiment jusqu'à une prise d'alimentation.

En pratique, ce type de câble a une coupe transversale en forme de 8 et comporte donc deux sections parallèles. Dans l'une des sections, est placé au moins un élément porteur, tandis que dans l'autre section, est placé au moins un module de fibres, notamment de fibres optiques.

Les deux sections sont conçues dans le même matériau, afin de pouvoir toutes deux résister à l'environnement extérieur et aux efforts supportés par la partie aérienne du câble et répondre aux contraintes imposées pour une installation à l'intérieur du bâtiment.

A partir de la façade du bâtiment, la section contenant les fibres optiques est généralement détachée de celle comportant l'élément porteur et elle seule est destinée à pénétrer à l'intérieur du bâtiment.

Ceci permet de conférer plus de souplesse à la partie du câble qui est utilisée à l'intérieur du bâtiment. Par ailleurs, la partie du câble qui comprend le porteur est utilisée pour permettre la fixation du câble aérien sur la façade du bâtiment.

Cette technique présente l'avantage d'éviter un raccordement au niveau de la façade du bâtiment.

Cependant, elle comporte des inconvénients majeurs.

Tout d'abord, ce câble intérieur / extérieur présente des propriétés mécaniques qui ne sont qu'un compromis entre les propriétés recherchées pour l'environnement extérieur et celles liées à une pose à l'intérieur du bâtiment.

Par ailleurs, cette technique nécessite de séparer l'enveloppe comportant les fibres optiques du reste du câble sur parfois de grandes longueurs. Ceci allonge considérablement le temps d'installation.

Par ailleurs, ce câble est coûteux car il doit présenter de nombreuses propriétés mécaniques. Son installation génère également de nombreux déchets, correspondant à la partie du câble incluant le porteur qui ne pénètre pas à l'intérieur du bâtiment.

Enfin, une autre technique consiste à installer au préalable des microtubes, dont une partie est aérienne et dont l'autre est placée à l'intérieur du bâtiment.

Dans un deuxième temps, un câble optique est installé à l'intérieur du microtube, par exemple par soufflage.

Cette technique présente l'avantage de ne pas nécessiter de raccord optique au niveau de la façade du bâtiment.

Cependant, elle comporte de nombreux inconvénients.

Tout d'abord, le temps d'installation est relativement long, du fait de la pose successive des microtubes et des câbles.

La pose des microtubes nécessite un raccord entre le microtube intérieur et le microtube extérieur.

Cette installation en deux temps oblige également à intervenir deux fois au niveau du point de branchement sur un poteau.

Cette technique nécessite, de surcroît, un matériel particulier pour l'installation du câble optique dans un microtube, ce qui augmente également le coût de l'installation.

Enfin, l'installateur devra transporter sur le chantier plusieurs composants (microtube intérieur, microtube extérieur et microcâble, équipement de pose), ce qui complique sa tâche.

Une autre technique de raccordement consiste à placer le câble dans des conduites enterrées. Ces câbles souterrains connus présentent les mêmes inconvénients que les câbles aériens classiques.

L'invention a pour objet de pallier ces inconvénients en proposant un nouveau câble de raccordement dont la fabrication et l'installation sont considérablement simplifiées par rapport aux techniques antérieures et qui présente également l'avantage de pouvoir être livré « prêt à l'emploi » en étant adapté aux contraintes du chantier d'installation.

Ainsi, l'invention concerne un câble de raccordement destiné à être placé entre un câble de distribution relié à un réseau de distribution général, et au moins une prise d'alimentation dans un bâtiment, ce câble de raccordement comprenant une enveloppe extérieure hybride, à l'intérieur de laquelle s'étend sans discontinuité optique au moins un microcâble contenant au moins une fibre optique, ladite enveloppe extérieure comprenant une première gaine avec une extrémité proximale et une extrémité distale et une deuxième gaine avec une extrémité proximale et une extrémité distale, les extrémités proximales desdites gaines étant raccordées au moyen d'un raccord mécanique et l'extrémité distale de la première gaine étant destinée à être raccordée audit câble de distribution et l'extrémité distale de la deuxième gaine étant destinée à être raccordée à ladite au moins une prise d'alimentation, ladite première gaine présentant des caractéristiques mécaniques adaptées à l'environnement extérieur et ladite deuxième gaine présentant des caractéristiques mécaniques adaptées à une utilisation à l'intérieur du bâtiment.

On comprend que l'environnement extérieur est différent pour un câble enterré qui est placé dans une conduite et pour un câble aérien.

De façon préférée, la longueur respective desdites première et deuxième gaines est variable, ce qui permet d'adapter le câble selon l'invention aux contraintes du chantier d'installation.

De préférence, la première gaine présente notamment les caractéristiques mécaniques suivantes : résistance à la traction comprise entre 50 et 150 daN, résistance à l'écrasement et au déchirement, et pour un câble aérien, une faible perméabilité à l'eau.

En ce qui concerne la résistance à la traction, la gamme indiquée s'applique lorsque l'allongement de la fibre optique est inférieur à 1/3 de la contrainte d'épreuve de la fibre optique.

La première gaine est notamment constituée en PE, matériau couramment utilisé pour les applications extérieures. Les caractéristiques mécaniques seront fonction de la section du câble et de sa portée (au maximum 50 m).

La norme NF EN 60794-3-20 s'applique aux câbles de télécommunication aériens autoportés. De façon générale, les caractéristiques mécaniques sont imposées par le cahier des charges correspondant à un câble déterminé.

On peut également se référer à la norme NF C 32-060 relative aux caractéristiques et propriétés des polyoléfines entrant dans la construction des enveloppes isolantes des câbles de télécommunication.

Egalement de façon préférée, la deuxième gaine présente les propriétés mécaniques suivantes : résistance au feu, rayon de courbure compris entre 15 et 20 mm, résistance à l'écrasement, souplesse.

En ce qui concerne la résistance au feu, la norme NF C 32070 (essai 1 C2) définit la non propagation à la flamme, la norme NF C 32070 (essai 2 C1) la non propagation de l'incendie, la norme NF C 32073 l'opacité des fumées et la norme IEC 60754-1 la toxicité des fumées.

Par ailleurs, les autres propriétés de la deuxième gaine sont définies par le cahier des charges correspondant au câble en cause, en tenant compte de la norme NF EN 187103 qui s'applique aux câbles optiques de télécommunication pour applications intérieures.

Le matériau couramment utilisé pour réaliser cette deuxième gaine est dit « sans halogène » (LSOH : Low Smoke zero Halogene).

De façon avantageuse, chacun des microcâbles prévus dans l'enveloppe extérieure du câble de raccordement comporte lui-même une gaine extérieure dont les caractéristiques (coefficient de frottement, rigidité...) sont adaptées aux techniques employées pour l'introduction du microcâble dans l'enveloppe (poussage, soufflage, tirage).

En particulier, le coefficient de frottement dynamique de la gaine extérieure du microcâble est, de préférence, inférieur à 0,2, le coefficient étant mesuré conformément au test décrit dans le document FR-2 857 461.

Le raccord mécanique prévu entre les deux gaines est conçu pour assurer l'étanchéité de l'enveloppe extérieure du câble et pour résister à une traction allant jusqu'à 20 daN.

L'invention concerne également un procédé de fabrication d'un câble selon l'invention, consistant à :
- réaliser une première gaine présentant des propriétés mécaniques adaptées à l'environnement extérieur,
- réaliser une deuxième gaine présentant des propriétés mécaniques adaptées à l'environnement intérieur,
- couper une portion d'une première longueur de ladite première gaine,
- couper une portion d'une deuxième longueur de la deuxième gaine,
- joindre lesdites deux portions, au moyen d'un raccord mécanique, de façon à former une cavité allongée et continue et
- installer au moins un microcâble contenant au moins une fibre optique dans ladite cavité.

De façon avantageuse, le câble est conditionné de telle sorte que chaque gaine est enroulée depuis le raccord entre les deux gaines.

L'invention sera mieux comprise et d'autres buts, avantages et caractéristiques de celle-ci apparaîtront plus clairement à la lecture de la description qui suit et qui est faite au regard des dessins annexés, sur lesquels :
- la Figure 1 représente de façon schématique un exemple d'un câble de raccordement selon l'invention,
- la Figure 2 est une coupe transversale selon II.II du câble de la Figure 1,
- la Figure 3 est une coupe transversale selon III.III du câble de la Figure 1,
- les Figures 4 à 6 illustrent de manière schématique des étapes de l'installation d'un câble de raccordement selon l'invention, entre un câble de distribution et une prise d'alimentation chez un abonné.

Les éléments communs aux différentes figures porteront les mêmes références numériques.

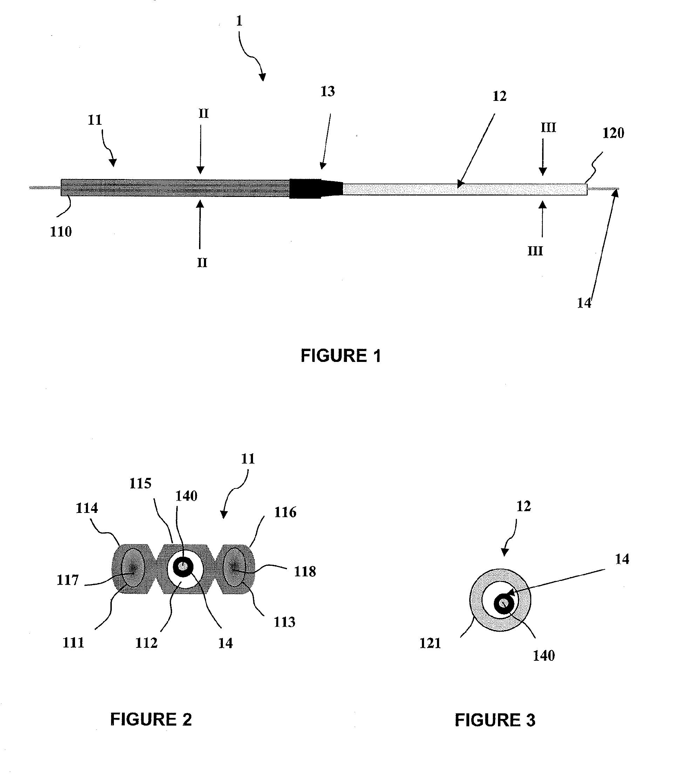

La Figure 1 représente un mode de réalisation d'un câble 1 selon l'invention.

Ce câble 1 comprend une enveloppe extérieure définissant une cavité continue, dans laquelle s'étend un microcâble 14.

Bien entendu, le câble selon l'invention pourrait comprendre plusieurs microcâbles.

L'enveloppe extérieure du câble 1 est composée d'une première gaine 11 et d'une deuxième gaine 12.

Ces deux gaines sont raccordées au niveau de leurs extrémités proximales par un raccord mécanique 13.

Lorsque le câble de raccordement est installé, l'extrémité distale 110 de la première gaine 11 est raccordée à un câble de distribution relié à un réseau de distribution général, tandis que l'extrémité distale 120 de la deuxième gaine est raccordée à une prise d'alimentation chez un abonné, et donc à l'intérieur d'un bâtiment.

De façon préférée, la première gaine 11 a une longueur comprise entre 30 et 100 mètres, tandis que la deuxième gaine 12 a une longueur comprise entre 20 et 30 mètres.

La première gaine est conçue pour constituer un câble aérien ou enterré et elle est donc adaptée à l'environnement extérieur. Elle comporte une résistance mécanique élevée.

Au contraire, la deuxième gaine 12 est destinée à être placée à l'intérieur d'un bâtiment. Elle est conçue pour présenter une bonne résistance au feu, une souplesse suffisante pour s'adapter à un cheminement sinueux à l'intérieur du bâtiment et également une bonne résistance transversale pour supporter des actions d'agrafage ou de collage (colle thermofusible par exemple). Cette gaine 12 peut ainsi présenter un rayon de courbure compris entre 15 et 20 mm.

Le raccord mécanique 13 entre les deux gaines 11 et 12 est conçu pour s'adapter aux différences de forme et de surface que présentent la section transversale de la première gaine 11 et celle de la deuxième gaine 12.

Il est également conçu pour assurer l'étanchéité de l'enveloppe extérieure du câble 1 ainsi que pour résister à la traction.

Ce raccord mécanique est notamment réalisé au moyen d'un matériau thermorétractable qui répond aux exigences de résistance à la traction et de bonne compatibilité entre les matériaux.

En particulier, il est avantageux que ce raccord résiste à une traction allant jusqu'à 20 daN.

En pratique, le câble 1 est réalisé à partir de grandes longueurs de gaines, du type de celle de la première gaine 11 et du type de celle de la deuxième gaine 12.

Comme on le verra ultérieurement, en fonction du chantier d'installation, des longueurs appropriées de chaque gaine sont coupées pour obtenir une première gaine 11 et une deuxième gaine 12, lesquelles sont ensuite raccordées au moyen du raccord mécanique 13.

Ce n'est qu'une fois l'enveloppe extérieure réalisée que un ou plusieurs microcâbles, tel que le microcâble 14 sont insérés dans la cavité ménagée par l'enveloppe extérieure ainsi formée.

Ainsi, la cavité ménagée par cette enveloppe est continue et les microcâbles 14 s'étendent également à l'intérieur de l'enveloppe sans discontinuité optique.

La Figure 2 illustre une section transversale d'un exemple de câble selon l'invention, au niveau de la première gaine 11.

Dans cet exemple, la gaine 11 se présente sous la forme d'un ruban, dans lequel sont ménagées trois cavités 111, 112 et 113, longitudinales et sensiblement parallèles entre elles.

La première gaine 11 comporte ainsi trois éléments 114, 115 et 116 reliés entre eux pour former un ruban, les éléments 114 et 116 présentant une section transversale sensiblement identique et étant fixés de part et d'autre d'un élément central 115.

Les éléments 114, 115 et 116 sont par exemple constitués en PE, PVC, PEHD ou PP et présentent des caractéristiques mécaniques choisies suivant le cahier des charges qui s'applique au câble. Ces caractéristiques sont notamment la résistance à la traction et la résistance à l'écrasement ou au déchirement.

Pour un câble aérien, la perméabilité à l'eau doit être faible.

Pour un câble souterrain, ses caractéristiques mécaniques et notamment son coefficient de frottement, sont choisis pour faciliter son installation à l'intérieur d'une conduite.

De façon générale, la résistance à la traction est comprise entre 50 et 150 daN, dans la mesure où l'allongement de la fibre optique est inférieur à un tiers de la contrainte d'épreuve sur la fibre optique.

Dans les cavités 111, respectivement 113 des tubes extérieurs 114, respectivement 116, sont prévus des éléments de renfort 117, respectivement 118. Ces renforts peuvent notamment se présenter sous la forme de FRP (Fiber Reinforced Polymer), de verre, d'aramide ou de carbone, ou encore d'éléments métalliques.

C'est dans la cavité 112 du tube central 115 qu'est inséré un ou plusieurs microcâbles, tel que le microcâble 14, lors de la fabrication du câble selon l'invention.

Dans l'exemple illustré sur les Figures 2 et 3, le microcâble 14 ne comporte qu'une fibre optique 140, mais il peut bien sûr en comprendre davantage. En pratique, le microcâble 14 comprend généralement de 1 à 6 fibres optiques.

La surface extérieure du microcâble 14 présente de préférence des caractéristiques qui facilitent son installation à l'intérieur de l'enveloppe du câble 1. Ainsi, le coefficient de frottement dynamique est avantageusement inférieur à 0,2, mesuré selon le test décrit dans le document FR-2 857 461.

La Figure 3 représente la section transversale du câble 1, au niveau de la deuxième gaine 12 qui se présente sous la forme d'un tube.

Cette gaine est notamment constituée en matériau LSOH (Low Smoke zero Halogene) couramment employé et présente des caractéristiques mécaniques choisies en fonction du cahier des charges qui s'applique au câble en cause. De façon générale, le rayon de courbure est compris entre 15 et 20 mm.

Elle présente un diamètre relativement faible, typiquement compris entre 1 et 3 mm pour le diamètre intérieur et inférieur à 5 mm pour le diamètre extérieur.

Dans l'exemple illustré à la Figure 3, cette deuxième gaine présente la forme d'un tube dont l'épaisseur est typiquement comprise entre 1 et 2 mm.

Elle ménage une cavité centrale 121 pour le ou les microtubes 14.

On comprend que le diamètre du ou des microcâbles et celui des cavités ménagées dans la première gaine 11 et dans la deuxième gaine 12 doivent être compatibles.

La description qui précède montre que le câble selon l'invention comporte deux gaines présentant des caractéristiques différentes, l'une d'elle étant adaptée à l'environnent extérieur et l'autre à l'environnement intérieur.

Par ailleurs, le ou les microcâbles optiques contenus dans ce câble s'étendent sans discontinuité à l'intérieur de son enveloppe extérieure.

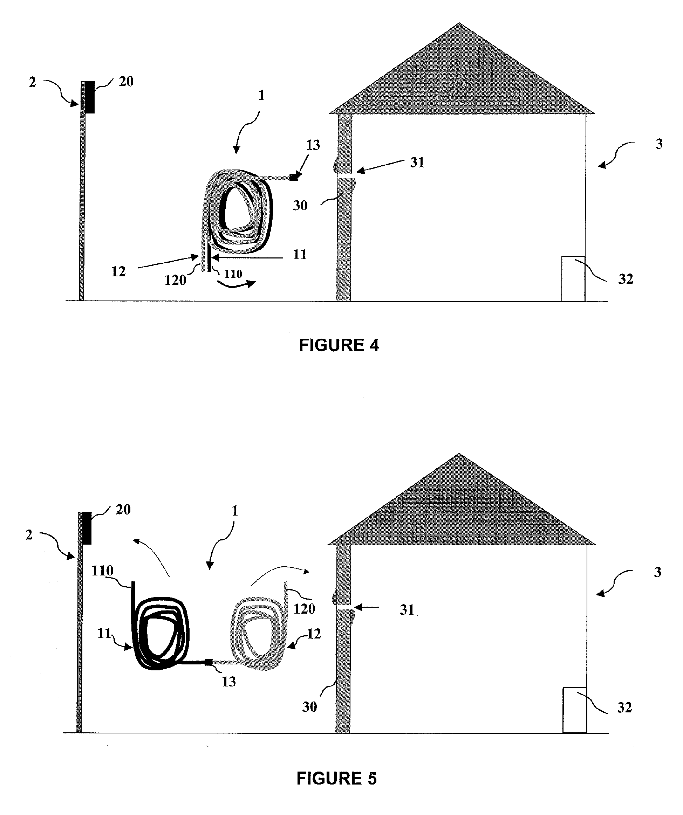

L'installation d'un câble de raccordement par voie aérienne selon l'invention va maintenant être décrite en référence aux figures 4 à 6.

Cette description va mettre en évidence les avantages du câble selon l'invention, notamment sa parfaite adaptation aux contraintes et sa facilité d'installation.

Pour faciliter son transport sur le chantier d'installation, le câble de raccordement selon l'invention est de préférence enroulé. Cet enroulement est effectué de façon à ce que chaque gaine 11, 12, soit enroulée à partir du raccord 13 entre les deux gaines.

C'est ce qu'illustre la Figure 4. La Figure 4 montre également un poteau 2 qui supporte un point de branchement. Ce dernier est destiné à raccorder le câble 1 à un câble de distribution qui n'est pas illustré sur la Figure 4.

Cette Figure 4 illustre également un bâtiment 3 dont une façade 30 est percée de façon à ménager une ouverture 31 pour le câble de raccordement 1.

La Figure 5 montre que le fait de conditionner le câble 1 en deux couronnes, à partir du raccord 13, permet de dérouler d'une part, la première gaine 11 en direction du point de branchement 20 et d'autre part, la deuxième gaine 12 vers la façade 30 du bâtiment 3.

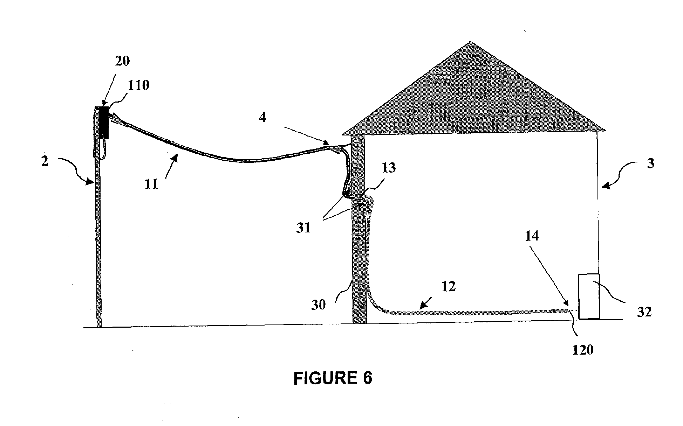

Comme le montre la Figure 6, l'installation du câble de raccordement est réalisée en faisant passer l'extrémité distale 120 de la deuxième gaine 12 à travers le point de pénétration 31.

La deuxième gaine est déroulée à l'intérieur du bâtiment 3 jusqu'à la prise terminale 32.

Lorsque la deuxième gaine 12 a été tirée à l'intérieur du bâtiment 3, le raccord 13 se trouve sensiblement au niveau du point de pénétration 31.

L'installation se poursuit en déroulant la première gaine 11 entre la façade 30 du bâtiment et le point de branchement 20 supporté par le poteau 2.

Cette première gaine 11 constitue la partie aérienne du câble 1 et elle est suspendue grâce à un système d'ancrage 4, du type de ceux classiquement utilisés pour les câbles aériens.

La jonction entre le câble de raccordement 1 et le point de branchement 20 supporté par le poteau 2, est réalisée au niveau de l'extrémité distale 110 de la première gaine 11.

On comprend que la longueur de la première gaine ainsi que celle de la deuxième gaine sont choisies en fonction des caractéristiques du chantier d'installation, pour éviter toute perte de câble.

Par ailleurs, le câble de raccordement selon l'invention présente l'avantage d'éviter un raccordement au niveau de la façade du bâtiment.

Ceci facilite bien sûr l'installation du câble et surtout permet de conserver une continuité optique.

Par ailleurs, chaque gaine du câble présente des propriétés spécifiques liées à l'environnement dans laquelle elle doit être installée.

Le câble selon l'invention permet de choisir une couleur différente pour chaque gaine du câble, adaptée à l'environnement.

Le temps de l'installation est réduit puisque le câble est entièrement réalisé avant l'installation et qu'il n'est donc pas nécessaire d'insérer dans l'enveloppe du câble un ou plusieurs microcâbles.

Par ailleurs, le conditionnement en deux couronnes permet de commencer l'installation du câble, indifféremment par la première ou la deuxième gaine.

Enfin, ce câble de raccordement ne nécessite qu'une intervention du côté du poteau 2, lors de la jonction du câble de raccordement 1 avec le câble de distribution.

Les références numériques insérées après les caractéristiques techniques figurant dans les revendications ont pour seul but de faciliter la compréhension de ces dernières et ne sauraient en limiter la portée.

## Revendications

1. Câble de raccordement (1) destiné à être placé entre un câble de distribution relié à un réseau de distribution général et au moins une prise d'alimentation (32) dans un bâtiment (3), ce câble de raccordement comprenant une enveloppe extérieure hybride, à l'intérieur de laquelle s'étend sans discontinuité optique au moins un microcâble contenant au moins une fibre optique (140), ladite enveloppe extérieure comprenant une première gaine (11) avec une extrémité proximale et une extrémité distale (110) et une deuxième gaine (12) avec une extrémité proximale et une extrémité distale (120), les extrémités proximales desdites gaines étant raccordées au moyen d'un raccord mécanique (13) et l'extrémité distale (110) de la première gaine (11) étant destinée à être raccordée audit câble de distribution et l'extrémité distale (120) de la deuxième gaine (12) étant destinée à être raccordée à ladite au moins une prise d'alimentation (32), ladite première gaine (11) présentant des caractéristiques mécaniques adaptées à l'environnement extérieur et ladite deuxième gaine (12) présentant des caractéristiques mécaniques adaptées à une utilisation à l'intérieur du bâtiment (3).

2. Câble de raccordement selon la revendication 1, dans laquelle ladite première gaine (11) présente une résistance à la traction comprise entre 50 et 150 daN,

3. Câble de raccordement selon la revendication 1 ou 2, dans lequel ladite deuxième gaine (12) dont le rayon de courbure est compris entre 15 et 20 mm.

4. Câble de raccordement selon l'une des revendications 1 à 3, dans lequel ledit au moins un microcâble (14) comporte lui-même une gaine extérieure dont le coefficient de frottement dynamique est inférieur à 0,2.

5. Câble de raccordement selon l'une des revendications 1 à 4, dans lequel le raccord mécanique (13) prévu entre les deux gaines (11, 12) est conçu pour assurer l'étanchéité de l'enveloppe extérieure du câble et pour résister à une traction inférieure à 20 daN.

6. Câble de raccordement selon l'une des revendications 1 à 5, dans lequel la longueur respective desdites première et deuxième gaines (11, 12) est variable.

7. Procédé de fabrication d'un câble conforme à l'une des revendications 1 à 6, consistant à :
- réaliser une première gaine (11) présentant des propriétés mécaniques adaptées à l'environnement extérieur,
- réaliser une deuxième gaine (12) présentant des propriétés mécaniques adaptées à l'environnement intérieur,
- couper une portion d'une première longueur de ladite première gaine (11),
- couper une portion d'une deuxième longueur de la deuxième gaine (12),
- joindre lesdites deux portions, au moyen d'un raccord mécanique (13), de façon à former une cavité allongée et continue et
- installer au moins un microcâble (14) contenant au moins une fibre optique (140) dans ladite cavité.

8. Procédé de fabrication selon la revendication 7, dans lequel le câble (1) est conditionné de telle sorte que chaque gaine (11, 12) est enroulée depuis le raccord (13) entre les deux gaines.
